# EUROPEAN PATENT APPLICATION

(11) **EP 2 731 273 A1**
(43) Date of publication of application: **14.05.2014**
(21) Application number: 12821975.5
(22) Date of filing: 10.08.2012
(51) Int. Cl.: H04B 1/74

(54) **MULTI-SITE CELL NETWORKING METHOD, BASE BAND UNIT, REMOTE RF UNIT AND SYSTEM**

(30) Priority: 10.08.2011 CN 201110228697
(71) Applicant: Huawei Technologies Co., Ltd, Shenzhen, Guangdong 518129 (CN)
(72) Inventor: GUO, Jiang, Shenzhen Guangdong 518129 (CN); HE, Yong, Shenzhen Guangdong 518129 (CN); XIA, Yingjiu, Shenzhen Guangdong 518129 (CN); LI, Baomin, Shenzhen Guangdong 518129 (CN); ZHU, Di, Shenzhen Guangdong 518129 (CN)
(74) Representative: Thun, Clemens
(86) International application number: PCT/CN2012/079985
(87) International publication number: WO 2013/020523

(57) **Abstract**

Embodiments of the present invention provide a networking method applied to a multi-site cell, a base band unit, a remote RF unit and a system. The method includes: connecting at least one RRU of one or more remote end remote units RRUs under a base station of a local cell to at least two base stations, where the at least two base stations include the base station of the local cell and at least one other base station; and continuing communication by using the at least one other base station when the communication between the one RRU of the one or more RRUs and the base station of the local cell fails.

## Description

This application claims priority to Chinese Patent Application No. 201110228697.4, filed with the Chinese Patent Office on August 10, 2011, and entitled "NETWORKING METHOD FOR MULTI-SITE CELL, BASE BAND UNIT, REMOTE RF UNIT AND SYSTEM", which is incorporated herein by reference in its entirety.

### FIELD OF THE INVENTION

The present invention relates to the field of wireless communications, and more specifically to a networking method for a multi-site cell (Multi-site Cell), a base band unit (Base Band Unit, BBU), a remote radio frequency unit (Remote Radio Frequency Unit, RRU) and a system.

### BACKGROUND OF THE INVENTION

With the development of social economy, mobile communication has deeply penetrated into every corner of routine working and life. The requirement on communication quality become higher and higher while dependence of people on the mobile communication becomes stronger and stronger. Currently, the rapid development of the high speed railway brings a huge challenge to wireless coverage along the existing railway, so that an in-the-train network KPI (Key Performance Indication, key performance indication) is greatly reduced, which therefore is generally concerned by mobile operators. Therefore, RRU multi-site cell is provided.

A multi-site cell utilizes RRU remote, and multiple physical cells (also referred to as subsites, subsite), which are at different sub-stations under one BBU, belong to different physical addresses, but logically belong to a same cell. Cell-level parameter configuration of each subsite, such as the number of carrier frequencies, a frequency point, channel configuration and a CGI (Cell Global Identity, cell global identity), is the same (output power of a carrier may be fine-tuned according to an actual situation). Therefore, when a mobile station runs along the railway, a relay between subsites occurs while a handover does not occur, thereby improving voice quality, and meanwhile saving a spectrum resource by multiplexing a same set of frequency points.

However, in a case of chain networking, if a fault occurs in a certain segment of an optical fiber in the chain networking, a chained RRU cannot normally work (some examples of an annual fault rate: optical fiber (500 m) 85%, RRU fault rate 2%, and BBU fault rate 1%), so that reliability is not high.

An existing solution is to make ring networking, but it needs to lay an east optical fiber connecting a RRU to a BBU and a west optical fiber connecting a RRU the BBU to form a ring network. For a requirement on the reliability, a backup optical fiber for the ring network must be laid independently, which doubles a work amount and a cost. A loop of the backup optical fiber even cannot be found along some certain actual railways.

Moreover, a fault of the BBU causes a breakdown of a whole system, and a service cannot be provided. To solve this single-point fault, a backup BBU must be added in a base station, which causes an increase of the cost. Further, complicated data configuration is caused due to introduction of the new BBU.

### SUMMARY OF THE INVENTION

Embodiments of the present invention provide a networking method applied to multi-site cell, a base band unit, a remote RF unit and a system, which can continue communication by using another base station when a fault occurs in the communication.

According to one aspect of the embodiments of the present invention, a networking method applied to a multi-site cell is provided, including: connecting at least one RRU of one or more remote end remote units RRUs under a base station of a local cell to at least two base stations, where the at least two base stations include a base station of the local cell and at least one other base station; and continuing communication by using the at least one other base station when the communication between the one RRU of the one or more RRUs and the base station of the local cell fails. According to another aspect of the embodiments of the present invention, a base band unit BBU is provided, including: a detector, configured to detect whether communication with one or more remote RF units RRUs under a local base station fails; and a controller, configured to: when the detector detects that the communication between the BBU and the one RRU of the one or more RRUs under the local base station fails, perform control to continue the communication by using another base station.

According to another aspect of the embodiments of the present invention, a remote RF unit RRU is provided, including: a second connector, connected to an RRU or a base band unit BBU under another base station.

According to another aspect of the embodiments of the present invention, a multi-site cell system is provided, including at least one foregoing base band unit BBU and at least one foregoing remote RF unit RRU.

According to the embodiments of the present invention, at least one RRU in the cell is connected to at least two base stations, so that each RRU in the cell may physically and logically be homed to at least two base stations because it is directly or indirectly connected to the two base stations, therefore, the communication may continue to be accomplished by using the BBU of another base station when a fault occurs in a certain segment of an optical fiber or on a certain BBU in the local base station, thereby increasing reliability.

### BRIEF DESCRIPTION OF THE DRAWINGS

To illustrate the technical solutions in the embodiments of the present invention or in the prior art more clearly, the following briefly describes accompanying drawings needed for describing the embodiments or the prior art. Obviously, the accompanying drawings in the following description are merely some embodiments of the present invention, and persons of ordinary skill in the art may obtain other accompanying drawings from these accompanying drawings without making creative efforts.
FIG. 1 is an exemplary flow chart of a networking method applied to a multi-site cell according to an embodiment of the present invention;
FIG. 2 is a schematic diagram of networking configuration according to a first exemplary embodiment of the present invention;
FIG. 3 is a schematic diagram of networking configuration according to a second exemplary embodiment of the present invention;
FIG. 4 is a schematic diagram of networking configuration according to a third exemplary embodiment of the present invention;
FIG. 5 is a block diagram of an exemplary structure of a BBU according to an embodiment of the present invention;
FIG. 6 is a schematic block diagram of a specific structure of a controller in a BBU according to an embodiment of the present invention;
FIG. 7 is a block diagram of another exemplary structure of a BBU according to an embodiment of the present invention; and
FIG. 8 is a schematic diagram of an exemplary structure of an RRU according to an embodiment of the present invention.

### DETAILED DESCRIPTION OF THE EMBODIMENTS

The following clearly and completely describes the technical solutions according to the embodiments of the present invention with reference to the accompanying drawings in the embodiments of the present invention. Obviously, the described embodiments are merely part of rather than all of the embodiments of the present invention. All other embodiments obtained by persons of ordinary skill in the art based on the embodiments of the present invention without making creative efforts shall fall within the protection scope of the present invention.

The technical solutions of the present invention may be applied to various communication systems, such as GSM, a code division multiple access (CDMA, Code Division Multiple Access) system, wideband code division multiple access wireless (WCDMA, Wideband Code Division Multiple Access Wireless), long term evolution (LTE, Long Term Evolution), and so on.

A base station mentioned in the specification may be a base transceiver station (BTS, Base Transceiver Station) in the GSM or the CDMA, or may be a NodeB (NodeB) in the WCDMA, or may be an evolved e-NodeB (eNB or e-NodeB, evolved Node B) in the LTE, which is not limited in the embodiments of the present invention.

Hereinafter, chain networking is taken as an example to describe the embodiments of the present invention in detail. However, the embodiments of the present invention are not limited to the chain networking. Persons skilled in the art may apply the technical solutions of the embodiments of the present invention to other networking configuration, such as ring networking star networking, and so on.

The embodiments of the present invention are described in detail below with reference to the accompanying drawings.

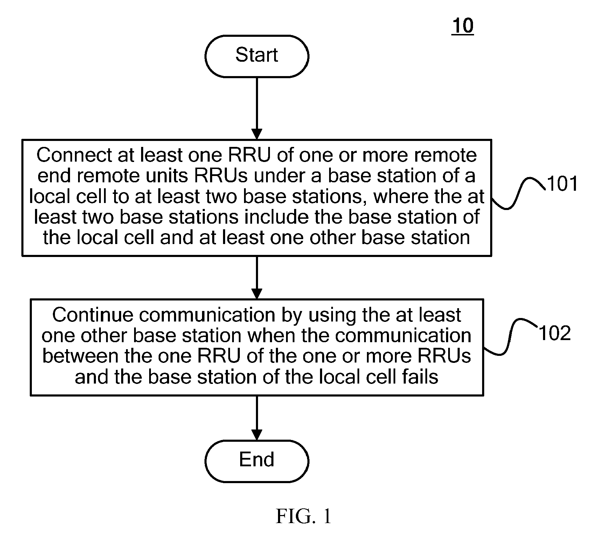

FIG. 1 is an exemplary flow chart of a networking method 10 applied to a multi-site cell according to an embodiment of the present invention.

In 101 of the method 10, connect at least one RRU (Remote Radio Frequency Unit, remote radio frequency unit) of one or more RRUs under a base station of a local cell to at least two base stations, where the at least two base stations include the base station of the local cell and at least one other base station.

In 102, continue communication by using the at least one other base station when the communication between the one RRU of the one or more RRUs and the base station of the local cell fails.

According to the embodiment of the present invention, at least one RRU in the cell is connected to at least two base stations, so that each RRU in the cell may physically and logically be homed to at least two base stations because it is directly or indirectly connected to the two base stations, therefore, the communication may continue to be accomplished by using a BBU of another base station when a fault occurs in a certain segment of an optical fiber or on a certain BBU in the local base station, thereby increasing reliability.

Several pieces of exemplary configuration according to the embodiment of the present invention are described further in detail below with reference to the accompanying drawings.

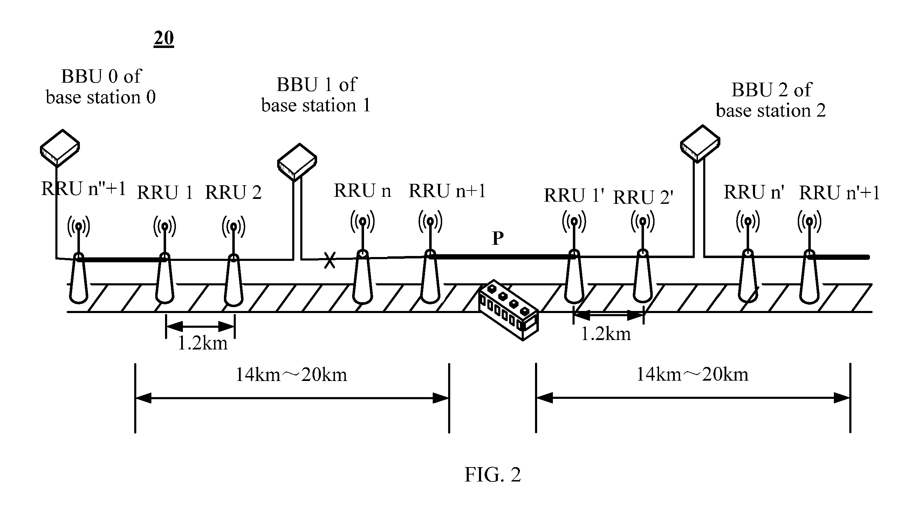

FIG. 2 is a schematic diagram of networking configuration 20 according to a first exemplary embodiment of the present invention.

In FIG. 2, assume that n+1 subsites exist under one cell, where n is an integer greater than or equal to 0, and an RRU at a subsite n is called RRU n. As shown in FIG. 2, an RRU 1 to an RRU n+1 are RRUs in a cell 1, and are connected to a BBU 1 in a base station 1 of the cell 1. Similarly, an RRU 1' to an RRU n'+1 are RRUs in a cell 2, and are connected to a BBU 2 in a base station 2 of the cell 2, and an RRU 1" to an RRU n"+1 are RRUs in a cell 0, and are connected to a BBU 0 in a base station 0 of the cell 0. For convenience here, in FIG. 2, for the cell 0, only the BBU 0 and the RRU n"+1 of the base station 0 are shown, and other RRU 1" to RRU n" are omitted. Certainly, persons skilled in the art may think out that another cell similar to these cell may also exist. Preferably, in a case of a high speed railway, in one cell, an RRU may be laid about every 1.2 km, and a distance from the first RRU (for example, the RRU 1) to the last RRU (for example, the RRU n+1) may totally be from about 14 km to about 20 km.

In addition, a segment of an optical fiber P (or another transmission medium, as shown by a bold solid line in FIG. 2) is also connected between the RRU n of the cell 1 and the RRU 1' of the cell 2. Therefore, all the RRUs (the RRU 1 to the RRU n+1) in the cell 1 are connected (directly or indirectly) to two BBUs, that is, the BBU 1 and the BBU 2, thereby being homed to two base stations, that is, the base station 1 and the base station 2.

In this way, the multi-site cell subsites of two RRUs are connected physically, so that each RRU in the cell 1 is physically and logically homed to two base stations. In normal working, a certain RRU generally belongs to a certain base station, for example, the base station 1. Therefore, when a fault occurring on a certain segment of the optical fiber causes a communication failure between a certain RRU, which is under the base station 1, and the BBU 1, the RRU after the fault point may automatically be homed to another base station, that is, the base station 2. The communication is continued by using the BBU 2 of the base station 2, so that a service is not interrupted because of a fault of the optical fiber. Here, the fault of the optical fiber may occur between the RRUs, or between the RRU and the BBU. Here, in a case of chain networking, the RRU after the fault point refers to an RRU at the fault point and a residual RRU after the RRU at the fault point according to a chain sequence.

In addition, the RRU 1 of the cell 1 is further connected to the RRU n"+1 of the cell 0, and the RRU n"+1 of the cell 0 is connected to the BBU 0. If the communication fails because of a fault occurring on the BBU 1, the RRU working on the BBU 1 is automatically homed to the two neighboring base stations, thereby avoiding the interruption of the service. Specifically speaking, in the case of the chain networking, when a fault occurs on the BBU 1, the RRU before the BBU 1 according to the chain sequence is switched to the BBU 0 of the base station 0, meanwhile, the RRU after the BBU 1 according to the chain sequence is switched to the BBU 2 of the base station 2.

For example, under the situation shown in FIG. 2, a fault (shown at a position x in FIG. 2) occurring on the optical fiber between the BBU 1 and the RRU n causes a communication failure. After the base station 1 detects generation of this fault, the base station 1 switches, through control, the RRU whose communication fails, that is, the RRU n at the fault point, and the residual RRU (only the RRU n+1 here) after the RRU n according to the chain sequence together to the BBU 2, so that the RRU n and the RRU n+1 are homed to the base station 2 and belong to a same cell with the RRU 1' to the RRU n'+1 of the base station 2 (actually, a CGI and so on of the original cell may still be used). Because the RRU n and the RRU n+1 are both physically and logically connected to the base station, coverage of a whole network has no loss due to the fault, which greatly increases reliability. Here, the term "switching" refers to homing RRUs under a base station of a cell A to a base station of another cell B, so that these RRUs and an RRU in the cell B belong to the same cell, and communication is performed by using a BBU in the base station of the cell B in a manner similar to that of the RRU in the cell B.

Moreover, if a fault occurs on the BBU 1 of the base station 1, under the chaining configuration shown in FIG. 2, the RRU 1 and the RRU 2 before the BBU 1 according to the chain sequence are switched to the BBU 0 in the base station 0 of the cell 0, thereby belonging to the base station 0, and the RRU 3 to the RRU n+1 after the BBU 1 based on the chain sequence are switched to the BBU 2 and are homed to the base station 2. Therefore, all the RRUs (the RRU 1 to the RRU n+1) under the BBU 1 are switched to the BBU 0 or the BBU 2, and therefore homed to the two neighboring base stations, that is, the base station 0 and the base station 2, respectively. Therefore, losses of coverage and capacity are not generated for a single-point fault of the BBU.

It should be noted that, although the RRU n+1 is connected to the RRU 1' and so on by using the optical fiber P in the foregoing exemplary description, persons skilled in the art should understand that the embodiment of the present invention is not limited to this. Depending on a design requirement and a design environment, the optical fiber may be replaced with any other proper communication medium to perform connection.

Moreover, it is described in the foregoing embodiment that the RRU 1 and the RRU n+1 are each connected to another base station, but the embodiment of the present invention is not limited to this, and such connection is only exemplary. Persons skilled in the art may understand that the connection with another base station may be implemented by using another RRU when a connection manner of the BBU 1 and that of RRU are different. For example, when the chaining configuration between the BBU 1 and the RRU 1 to the RRU n+1 is star networking, only one RRU, such as the RRU n, may be connected to another base station, for example, the BBU 2 of the base station 2.

In a case of the star networking, when a fault occurring on a certain segment of the optical fiber causes a communication failure between the RRU n and the BBU 1 under the base station 1, and the RRU n is connected to the BBU 2, only the RRU n may be switched to the BBU 2, so that the RRU n is homed to the base station 2, and configuration of other RRUs under the base station 1 is not changed. When communication fails because of a fault on the BBU 1, only the RRU n connected to the BBU 2 may be switched to the BBU 2.

In addition, although in the foregoing embodiment, the RRU n+1 is exemplarily connected to two base stations, that is, the base station 1 and the base station 2, or the RRU 1 is connected to two base stations, that is, the base station 1 and the base station 0, the invention is not limited to this. Persons skilled in the art may implement a connection with more than two base stations, such as 3 or 4 base stations, thereby further increasing the reliability of the communication.

According to the embodiment of the present invention, at least one RRU in the cell is connected to at least two base stations, so that each RRU in the cell may physically and logically be homed to at least two base stations because it is directly or indirectly connected to the two base stations, therefore, the communication may continue to be accomplished by using a BBU of another base station when a fault occurs in a certain segment of an optical fiber or on a certain BBU in a local base station, thereby increasing the reliability. In addition, because the embodiment of the present invention does not need to adopt ring networking and lay a backup BBU under each base station, a cost is saved and the network configuration is simplified.

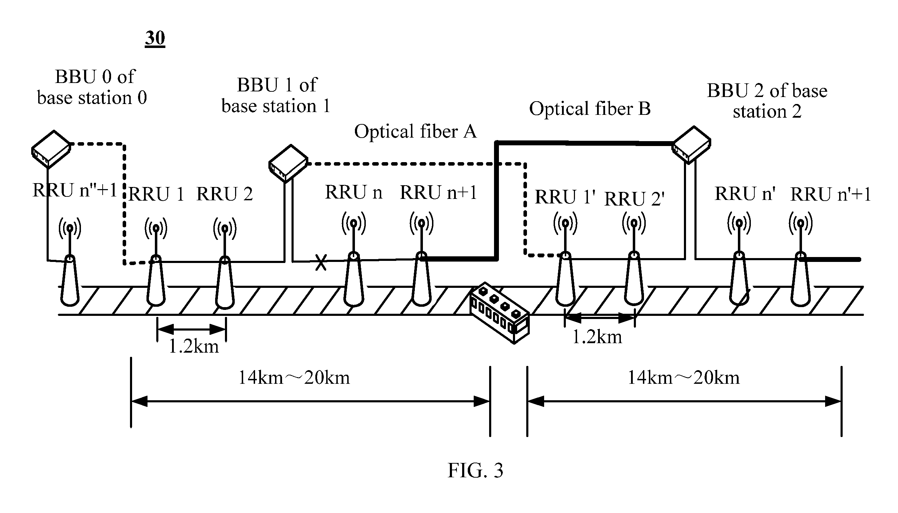

FIG. 3 is a schematic diagram of networking configuration 30 according to a second exemplary embodiment of the present invention.

As shown in FIG. 3, a difference from the second exemplary embodiment shown in FIG. 2 is that, a connection which is shown in FIG. 2 and uses an optical fiber P between an RRU n+1 and an RRU 1 is replaced, the RRU n+1 is directly connected to a BBU 2 through a backup optical fiber B (shown by a bold fold line in FIG. 3), and an RRU 1' is directly connected to a BBU 1 through a backup optical fiber A (shown by a dotted fold line in FIG. 3). Besides, the configuration of the second exemplary embodiment in FIG. 3 may be with the same as the configuration of the first exemplary embodiment in FIG. 2.

When a fault occurs on an optical fiber between the BBU 1 and an RRU n (shown at a position x in FIG. 3), a base station 1 detects the occurrence of the fault. Under a situation that the backup optical fiber A and the backup optical fiber B are not faulty, the base station 1 switches, through control, the RRU n and the RRU n+1 after the RRU to the BBU 2, so that the RRU n and the RRU n+1 are homed to a base station 2 and belong to a same cell with the RRU 1' to an RRU n'+1 of the base station 2 (actually, a CGI and so on of the original cell may still be used). Similar to the first exemplary embodiment of the present invention, because the RRU n and the RRU n+1 are both physically and logically connected to the base station 2, coverage of a whole network has no loss due to the fault, which greatly increases reliability.

Moreover, since the RRU 1 is connected to a BBU 0 through a backup optical fiber C, when a fault occurs on the BBU 1 of the base station 1, under the chaining configuration shown in FIG. 3, similar to the first exemplary embodiment, the RRU 1 and an RRU 2 are switched to the BBU 0 in a base station 0 of a cell 0, thereby being homed to the base station 0, and an RRU 3 to the RRU n+1 are switched to the BBU 2 and are homed to the base station 2. Therefore, all RRUs (the RRU 1 to the RRU n+1) under the BBU 1 are switched to the BBU 0 or the BBU 2, thereby being homed to two neighboring base stations, that is, the base station 0 and the base station 2, respectively. Therefore, losses of coverage and capacity are not generated for a single-point fault of the BBU. The second exemplary embodiment of the present invention solves a problem that specification of the series number of an RRU cascade in the first exemplary embodiment is possibly limited in a practical application, and may halve a requirement on the series number of the RRU cascade. In addition, the networking configuration 30 in the second exemplary embodiment of the present invention further has an advantage of RRU ring networking of a single base station, thereby further increasing the reliability. Here the series number of the RRU cascade refers to a total number of RRUs connected on one chain. In the first exemplary embodiment shown in FIG. 2, considering the cell 1 and the cell 2, the series number of the RRU cascade is 2n+2. In the second exemplary embodiment shown in FIG. 3, still considering the cell 1 and the cell 2, the series number of the RRU cascade is halved to n+1.

It should also be noted that, a communication medium in the second exemplary embodiment of the present invention is also not limited to the optical fiber. Depending on a design requirement and a design environment, the optical fiber may be replaced with any other proper communication medium to perform the connection.

Moreover, it is described in the foregoing embodiment that the RRU 1 and the RRU n+1 are each connected to a BBU in another base station, but the embodiment of the present invention is not limited to this, and such connection is only exemplary. Persons skilled in the art may understand that the connection with another base station may be implemented by using another RRU when a connection manner of the BBU 1 and that of the RRU are different. For example, when the chaining configuration between the BBU 1 and the RRU 1 to the RRU n+1 is star networking, only one RRU, such as the RRU n, may be connected to another base station, for example, the BBU 2 of the base station 2.

Moreover, in addition to connecting at least one RRU (such as the RRU n+1) to the BBU 1 and the

BBU 2, the at least one RRU may also be connected to more base stations.

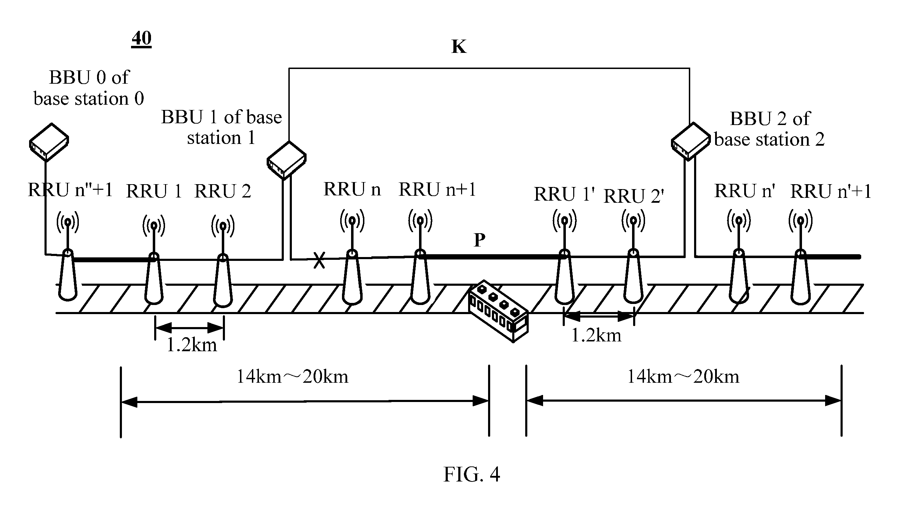

FIG. 4 is a schematic diagram of networking configuration 40 according to a third exemplary embodiment of the present invention.

As shown in FIG. 4, the networking configuration 40 of the third exemplary embodiment is similar to the networking configuration 20 of the first exemplary embodiment in FIG. 2, a difference is that a connection exists between BBUs, for example, a BBU 1 and a BBU 2 are connected to each other, so that networking of a base station is more reliable. That is to say, the BBU 1 may be connected to one of other BBUs. Preferably, in all BBUs, all BBUs are connected in a manner that the neighboring BBUs are paired.

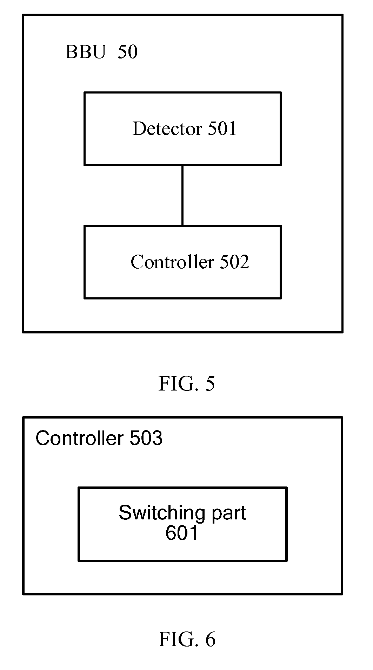

FIG. 5 is a block diagram of an exemplary structure 50 of a BBU according to an embodiment of the present invention.

As shown in FIG. 5, the BBU 50 (such as a BBU 1 shown in FIG. 2 to FIG. 4) may include a detector 501 and a controller 502.

The detector 501 is configured to detect whether communication with one or more RRUs under a local base station fails.

The controller 502 is configured to: when the detector 501 detects that the communication between the BBU and one RRU of one or more RRUs under the local base station fails, perform control to continue the communication by using another base station (such as a base station 2 shown in FIG. 2 to FIG. 4).

Each part of the BBU 50 may execute relative steps in FIG. 1, which is not repeatedly described here.

According to the embodiment of the present invention, at least one RRU in a cell is connected to at least two base stations, so that each RRU in the cell may be physically and logically homed to the at least two base stations because it is directly or indirectly connected to the two base stations, therefore, the communication may continue to be accomplished by using a BBU of another base station when a fault occurs in a certain segment of an optical fiber or on a certain BBU in the local base station, thereby increasing reliability.

FIG. 6 is a schematic block diagram of a specific structure 60 of a controller 503 in a BBU 50 according to an embodiment of the present invention.

As shown in FIG. 6, the controller 503 may include a switching part 601. The switching part 601 is configured to switch an RRU under a local base station to another base station when communication fails, that is, switch the RRU under the BBU to one of other BBUs, so as to continue the communication of the RRU.

Specifically speaking, in a case of chain networking, when the communication failure is caused by a fault of an optical fiber, the switching part 601 switches the RRU whose communication fails (such as an RRU n shown in FIG. 2 to FIG. 4) and another RRU (such as an RRU n+1 shown in FIG. 2 to FIG. 4) after the RRU to one (such as a BBU2 shown in FIG. 2 to FIG. 4, that is, a base station 2) of the other base stations. When the communication failure is caused by a fault of the base band unit BBU (such as a BBU 1 shown in FIG. 2 to FIG. 4) in the local base station, the switching part 601 switches the RRU under the local base station to the at least one other base station. Under the situation shown in FIG. 2 to FIG. 4, the RRU under the local base station is switched to two neighboring base stations, that is, a base station 0 and the base station 2. Under another situation, the RRU under the local base station may also be switched to only one base station, and this situation has been described foregoing in detail, which is therefore not repeatedly described here.

In a case of star networking, if the RRU n is connected to the BBU 2, when a communication failure occurs between the RRU n and the BBU 1, no matter the communication failure is caused by a fault of the optical fiber or a fault of the BBU 1 itself, the BBU 1 switches the RRU n to the BBU 2, thereby homing the RRU n to the base station 2, and configuration of another RRU under a base station 1 is not changed.

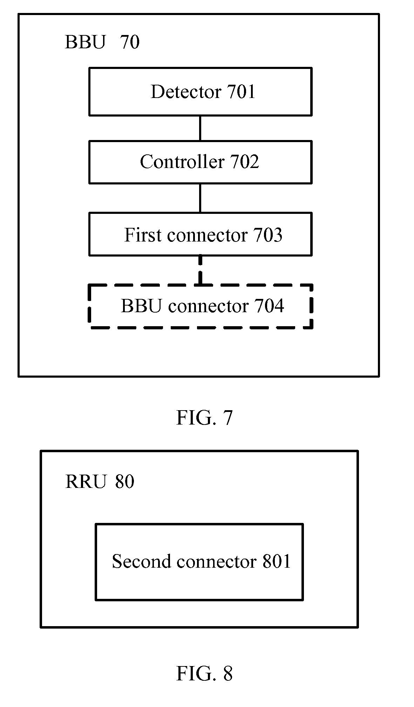

FIG. 7 is a block diagram of another exemplary structure 70 of a BBU according to an embodiment of the present invention.

As shown in FIG. 7, the BBU 70 (such as a BBU 1 in FIG. 3) includes a detector 701, a controller 702 and a first connector 703.

The detector 701 and the controller 702 in FIG. 7 are similar to a detector 501 and a controller 502 in FIG. 5, respectively.

The first connector 703 is configured to be connected to a first RRU of a next base station and a last RRU of a previous base station.

Moreover, the BBU 70 may also include a BBU connector 704, configured to be connected to a BBU connector of the next base station, so that BBUs of two base stations are connected to each other.

FIG. 8 is a schematic block diagram of an exemplary structure 80 of an RRU according to an embodiment of the present invention.

As shown in FIG. 8, the RRU 80 may include a second connector 801, configured to be connected to an RRU or a base band unit BBU under another base station. Moreover, the second connector 801 may be connected to an RRU or a BBU under at least one other base station.

According to the embodiment of the present invention, at least one RRU in the cell is connected to at least two base stations, so that each RRU in the cell may be physically and logically homed to the at least two base stations because it is directly or indirectly connected to the two base stations, therefore, the communication may continue to be accomplished by using a BBU of another base station when a fault occurs in a certain segment of the optical fiber or on a certain BBU in the local base station, thereby increasing reliability.

Moreover, because according to the embodiment of the present invention, there is no need to adopt ring networking and there is no need to lay a backup BBU under each base station, a cost is saved and network configuration is simplified.

It should be noted that, for clarity and conciseness, FIG. 5 to FIG. 8 only show parts related to the embodiment of the present invention, but persons skilled in the art should understand that the device or part shown in FIG. 5 to FIG. 8 may include another necessary unit.

In addition, a multi-site cell system according to the embodiments of the present invention may include the foregoing RRU and BBU.

Persons of ordinary skill in the art may be aware that, in combination with the examples described in the embodiments disclosed here, units and algorithm steps can be implemented by electronic hardware, computer software, or a combination of the two. To clearly describe interchangeability between the hardware and the software, compositions and steps of each embodiment are generally described according to functions in the foregoing illustration. Whether the functions are executed by hardware or software depends on a particular application and a design constraint condition of the technical solutions. Persons skilled in the art may use different methods to implement the described functions for every particular application, but it should not be considered that such implementation goes beyond the scope of the present invention.

It may be clearly understood by persons skilled in the art that, for convenience and brevity of description, for a detailed working process of the foregoing system, apparatus and unit, reference may be made to the corresponding process in the foregoing method embodiments, which is not repeatedly described here.

In the several embodiments provided in the present application, it should be understood that the disclosed system, apparatus and method may be implemented in other manners. For example, the foregoing described apparatus embodiments are merely exemplary. For example, division of the units is merely a kind of logical function division and there may be another division manner in practical implementation. For example, multiple units or components may be combined or integrated into another system, or some features may be ignored or not executed. In addition, the displayed or discussed mutual couplings or direct couplings or communication connections may be implemented through some interfaces. The indirect couplings or communication connections between the apparatuses or units may be implemented in an electronic, mechanical or another manner.

The units described as separate parts may or may not be physically separate, and parts displayed as units may or may not be physical units, may be located in one position, or may be distributed on multiple network elements. Part of or all of the units may be selected according to an actual need to achieve the objectives of the solutions of the embodiments.

In addition, the functional units in the embodiments of the present invention may be integrated into a processing unit, or each of the units may exist alone physically, or two or more units are integrated into a unit. The integrated unit may be implemented in a form of hardware, or may be implemented in a form of a software functional unit.

When being implemented in the form of a software functional unit and sold or used as a separate product, the integrated unit may be stored in a computer-readable storage medium. Based on such understanding, the technical solutions of the present invention essentially, or the part contributing to the prior art, or all of or part of the technical solutions may be implemented in a form of a software product. The computer software product is stored in a storage medium and includes several instructions for instructing a computer device (which may be a personal computer, a server, or a network device, and the like) to execute all of or part of the steps of the methods described in the embodiments of the present invention. The storage medium includes: any medium that may store program codes, such as a U-disk, a removable hard disk, a read-only memory (ROM, Read-Only Memory), a random access memory (RAM, Random Access Memory), a magnetic disk, or a compact disk and so on.

It should be further pointed out that, in the apparatus and method of the present invention, obviously, each part or step may be separated and/or recombined. Such separation and/or recombination should be considered as equivalent solutions of the present invention. Moreover, steps for executing the foregoing series of processing may be naturally executed in a time order according to the order of description. However, they are not necessarily executed according to the time order.

The foregoing descriptions are merely exemplary implementation manners of the present invention, but not intended to limit the protection scope of the present invention. Any variation or replacement that is readily conceivable to persons skilled in the art without departing from the technical scope disclosed in the present invention shall fall within the protection scope of the present invention. Therefore, the protection scope of the present invention shall be subject to the protection scope of the appended claims.

## Claims

1. A networking method applied to a multi-site cell, comprising:
connecting at least one RRU of one or more remote end remote units RRUs under a base station of a local cell to at least two base stations, wherein the at least two base stations comprise the base station of the local cell and at least one other base station; and
continuing communication by using the at least one other base station when the communication between the one RRU of the one or more RRUs and the base station of the local cell fails.

2. The method according to claim 1, wherein the process of the continuing the communication by using the at least one other base station comprises:
in a case of chain networking,
when the communication failure is caused by a fault of an optical fiber, switching the RRU at a fault point and a residual RRU that is after the RRU at the fault point according to a chain sequence to one of the at least one other base station; and
when the communication failure is caused by a fault of a base band unit BBU in the base station of the local cell, switching the RRU under the base station of the local cell to the at least one other base station.

3. The method according to claim 2, wherein the process of, when the communication failure is caused by the fault of the base band unit BBU in the base station of the local cell, the switching the RRU under the base station of the local cell to the at least one other base station comprises:
switching an RRU that is before the BBU according to the chain sequence and an RRU that is after the BBU according to the chain sequence to two different base stations.

4. The method according to any one of claims 1 to 3, wherein the process of the connecting the at least one RRU of the one or more RRUs under the base station of the local cell to the at least two base stations comprises:
connecting a last RRU under the base station of the local cell to a first RRU in a next cell.

5. The method according to any one of claims 1 to 3, wherein the process of the connecting the at least one RRU of the one or more RRUs under the base station of the local cell to the at least two base stations comprises:
connecting a last RRU under the base station of the local cell to a BBU in a next cell, and connecting a first RRU in the next cell to the BBU of the local cell.

6. The method according to claim 1, wherein the process of the continuing the communication by using the at least one other base station comprises:
in a case of star networking and that the RRU whose communication fails is connected to the at least one other base station,
when the communication failure is caused by a fault of an optical fiber, switching the RRU whose communication fails to one of the at least one other base station; and
when the communication failure is caused by a fault of a base band unit BBU in the base station of the local cell, switching the RRU whose communication fails to one of the at least one other base station.

7. The method according to any one of claims 1 to 6, wherein base band units BBUs of the at least two base stations are connected to each other.

8. A base band unit BBU, comprising:
a detector, configured to detect whether communication with one or more remote radio frequency units RRUs under a local base station fails; and
a controller, configured to: when the detector detects that the communication between the BBU and one RRU of the one or more RRUs under the local base station fails, perform control to continue the communication by using another base station.

9. The BBU according to claim 8, wherein the controller comprises:
a switching part, configured to switch the RRU under the local base station to the another base station when the communication fails.

10. The BBU according to claim 9, wherein:
in a case of chain networking, when the communication failure is caused by a fault of an optical fiber, the switching part switches the RRU at a fault point and a residual RRU that is after the RRU at the fault point according to a chain sequence to one of the another base station; and
when the communication failure is caused by a fault of the base band unit BBU in the local base station, the switching part switches the RRU under the local base station to the at least one other base station.

11. The BBU according to claim 10, wherein when the communication failure is caused by the fault of the base band unit BBU in the local base station, the switching, by the controller, the RRU under the local base station to the at least one other base station comprises:
the controller switches an RRU that is before the BBU according to the chain sequence and the RRU that is after the BBU according to the chain sequence to two different base stations.

12. The BBU according to claim 9, wherein:
in a case of star networking, when the communication fails, the switching part switches the RRU whose communication fails and which is connected to at least one other base station to the at least one other base station.

13. The BBU according to any one of claims 8 to 12, further comprising:
a first connector, configured to be connected to a first RRU of a next base station and a last RRU of a previous base station.

14. The BBU according to claim 13, further comprising:
a BBU connector, configured to be connected to a BBU connector of the next base station, so that BBUs of the two base stations are connected to each other.

15. A remote radio frequency unit RRU, comprising:
a second connector, connected to an RRU or a base band units BBUs under another base station.

16. A multi-site cell system, comprising at least one base band unit BBU according to any one of claims 8 to 14, and at least one remote RF unit RRU according to claim 15.
